# EUROPEAN PATENT APPLICATION

(11) **EP 0 903 327 A2**
(43) Date of publication of application: **24.03.1999**
(21) Application number: 98117545.8
(22) Date of filing: 16.09.1998
(51) Int. Cl.: C03B 33/09

(54) **Method for separating non-metal material**

(30) Priority: 17.09.1997 JP 251515/97; 17.11.1997 JP 314728/97
(71) Applicant: NEC CORPORATION, Tokyo (JP)
(72) Inventor: Sawada, Hiroshi, Ohtsu-shi, Shiga (JP)
(74) Representative: Glawe, Delfs, Moll & Partner

(57) **Abstract**

The present invention discloses a method for linearly separating a non-metal material such as a glass substrate of large width. A glass substrate (2) is mounted and fixed on a supporting stand (1), a sheath heater (3) is disposed in contacting with a bottom surface of the glass substrate (2) to form a heating zone (2a), whereby a crack (5) is started to be extended from an end face flaw (4) formed at an edge (6) of the glass substrate (2) in advance. A tip of the crack (5) is cooled locally by spraying air from a nozzle (9) movably disposed on a top surface of the glass substrate (2) to further extend the crack (5) and the nozzle (9) is moved to the end of the glass substrate (2) to separate the glass substrate (2).

## Description

### BACKGROUND OF THE INVENTION

### 1. Field of the Invention

The present invention relates to a method for separating a brittle non-metal material such as glass used in an electronic industry utilizing a thermal stress.

### 2. Description of the Related Art

In a recent electronic industry manufacturing a color plasma display panel (PDP), a liquid crystal display (LCD) and electroluminescence (EL) using a glass substrate, in order to decrease manufacturing costs, a plurality of patterns is formed on a large and flat glass substrate and is required to be separated individually. Developing a processing technique such that the plurality of patterns can be separated without producing small glass chips and wastes has been desired.

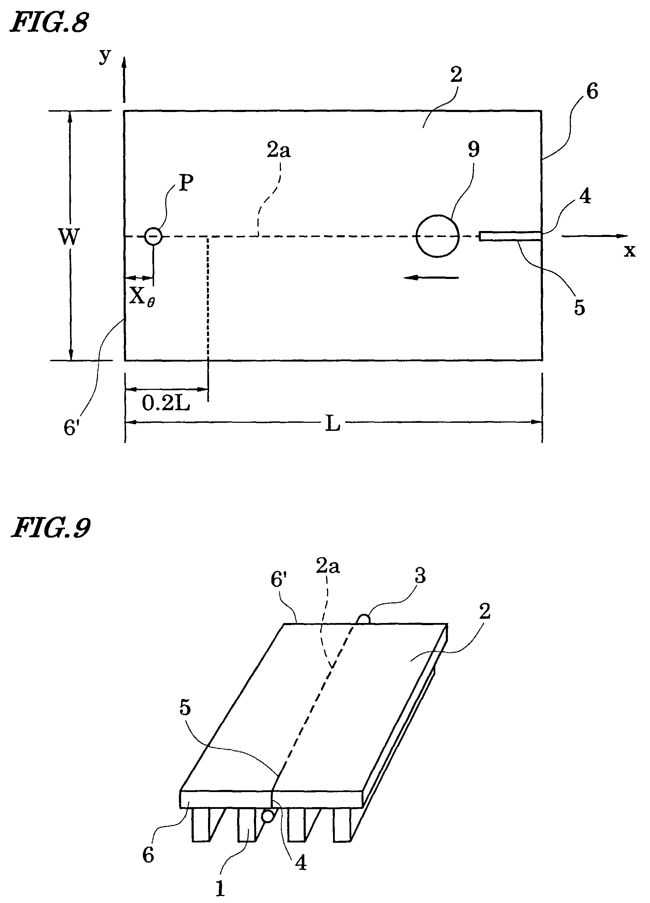

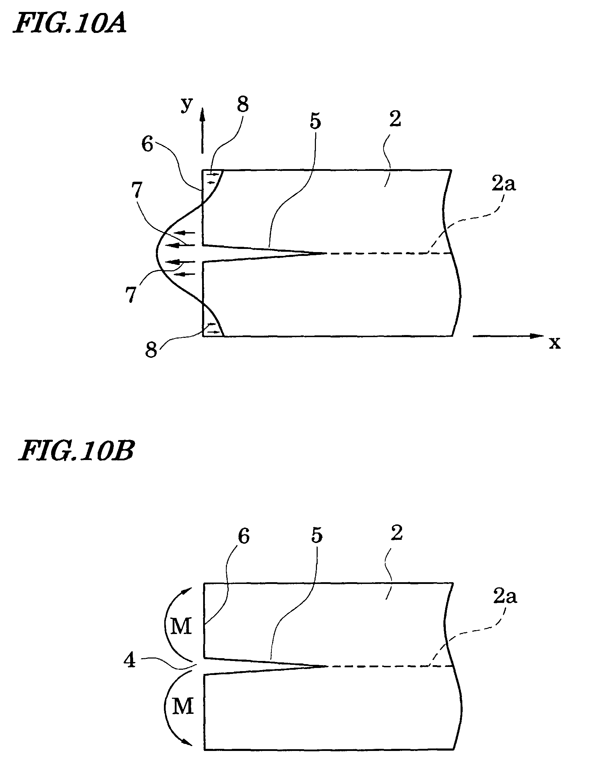

An example of the separation includes a use of a thermal stress, which is described below referring to Figures. As shown in Fig. 9, a glass substrate 2 having a lower melting point and a thickness of about 3 mm is mounted on a supporting stand 1. A linear heat source, for example a sheath heater 3 having a diameter of 9 mm, a length of 1400 mm and input power of 600 W is disposed in contact with a bottom surface of the glass substrate 2. At a position of starting separation at one side edge 6 of the glass substrate 2, an end face flaw 4 is formed by pointing with diamond. When a current is applied to the sheath heater 3, temperature of a linear area (heating zone designated by a dashed line) 2a along the sheath heater increases. On the edge 6 of the substrate, a stress is produced in a y direction in proportion to the stress 7, 8 in an x direction shown in Fig. 10A. The stress is concentrated on the end face flaw 4. Once the stress exceeds tensile strength of the glass, a crack 5 is produced from the end face flaw 4 along the heating zone 2a. When the crack 5 is produced, a stress intensity factor is produced by the moment M as shown in Fig. 10B. When the value of the stress intensity factor exceeds a fracture toughness value of the glass, the crack 5 further extends. A mechanism of the crack extension by the linear heat source is similar to a model subjecting a tensile stress 7 and a compressive stress 8 in an isothermal system as shown in Fig. 10A. Such stress urges the moment to act. Once the crack 5 reaches to the other side edge 6', the glass substrate 2 is separated.

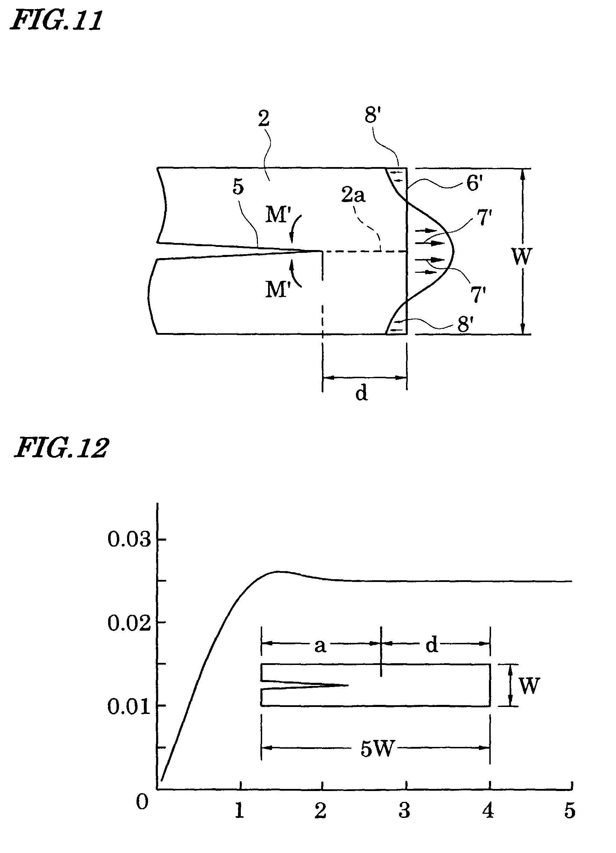

In the conventional separation using the linear heat source, linearity of the crack extension is good. However, when a ratio of a distance d from a tip of the crack 5 to the end of the glass substrate 2 and a width W of the glass substrate is less than 1.5 (d/W < 1.5) as shown in Fig. 11, the stress 7', 8' produced on the edge 6' urges the moment M' to act on the crack 5 to be closed, thereby reducing the stress intensity factor as shown in Fig. 12 when the crack 5 approaches to the end. As a result, an extension speed of the crack 5 is lowered that causes a fatal disadvantage that the crack 5 does not reaches to the end and an area not separated remains in the substrate having a wider width W. In case that a plate glass has wider width W, for example, exceeding 800 mm, non-separated area remains. Furthermore, a great difference in temperature between a heated portion and a remaining portion is produced in accordance with an increase in a heating time caused by a low speed of the crack extension. In consequence thereof, out-of-plane is distorted, resulting in defective products.

### SUMMARY OF THE INVENTION

It is therefore an object of the present invention to provide a method for linearly separating a non-metal material and at high speed leaving no non-cut area and with no out-of-plane distortion even though the non-metal material is a large width substrate.

According to a first aspect of the present invention, there is provided a method for separating a non-metal material comprising the steps of contacting a substrate made of the non-metal material with a linear heat source to form a heating zone, cooling locally a tip of a crack produced on the heating zone, and extending the crack along the heating zone to separate the substrate.

According to a second aspect of the present invention, there is provided a method for separating a non-metal material comprising the steps of contacting a substrate made of the non-metal material with a linear heat source to form a heating zone, extending a crack produced on the material by applying a heat and applying an inverted stress to an end of the substrate so as to dissipate a stress for closing the crack with the crack being approached to the end.

According to a third aspect of the present invention, there is provided a method for separating a non-metal material comprising the steps of contacting a substrate made of the non-metal material with a linear heat source to form a heating zone, cooling locally a tip of a crack produced on the heating zone, and applying an inverted stress to an edge of the substrate.

In the foregoing aspects, it is preferable that the linear heat source is contacted with one surface of the substrate, and a cooling medium is sprayed onto the heating zone of the other surface to cool locally.

Alternatively, the cooling medium may be sprayed onto a contact portion of the substrate and the linear heat source bidirectionally.

A nozzle for applying the cooling medium may be disposed at a tilt to the substrate to spray backward to the crack.

It is a preferable mode that a diameter of the local cooled area is 0.5% greater or more of a width of the substrate.

Also, it is a preferable mode that a portion being subject to separation at the edge of the substrate is fixed and both sides of the portion are held movably in a crack extending direction and a perpendicular direction thereof, thereby applying an inverted stress to the edge of the substrate.

Furthermore, it is a preferable mode that a portion being subject to separation at the edge of the substrate is fixed and external force is added to both sides of the portion in the crack extending direction, thereby applying an inverted stress to the edge of the substrate.

According to a fourth aspect of the present invention, there is provided a method for separating a non-metal material comprising the steps of contacting a substrate made of the non-metal material with a linear heat source to form a heating zone, cooling locally the heating zone adjacent to one side edge of the substrate opposite to the other side edge having a flaw with a cooling position being fixed, cooling locally a crack produced from the end face flaw on the heating zone, and moving the local cooled area of the crack along the heating zone and extending the crack along the heating zone.

In the fourth aspect, the cooling position X_{θ} upon the local cooling being fixed has preferably a numerical relation of 0<X_{θ}≤0.2L (L is a length of the substrate) based on the edge (X_{θ}=0) of the substrate.

Thus, it can be provided a method for linearly separating a brittle non-metal material such as glass and ceramics at high speed leaving no non-cut area and with no out-of-plane distortion even though the non-metal material is a large width substrate.

A method for separating a brittle non-metal material having a wide width such as glass and ceramics utilizing a heat stress is disclosed herein. According to the method, a strip substrate made of the non-metal material is contacted with a linear heat source such as sheath heater to form a heating zone on the substrate, a crack is extended by applying a heat from an end face flaw formed on one side edge of the substrate in advance, an inverted stress is applied to the edge of the substrate so as to dissipate a stress for closing the crack with the crack being approaching to the end, thereby separating the substrate without lowering a crack extending speed to the end of the substrate.

A tip of the crack slightly extended from the end face flaw by applying a heat is cooled locally at room temperature or less and the cooled area is moved along the heating zone. This allows extending the crack to the end of the substrate at high speed to separate the substrate. It is possible to extend the crack to the end of the substrate readily without lowering the extending speed by using a combination of the local cooling of the tip of the crack and the inverted stress.

Most preferable cooling area is the tip of the crack and backward thereof. When only a front area of the tip of the crack is cooled, the crack is not extended. Therefore, the front area of the tip should not be cooled. Both the tip of the crack and the front area thereof may be cooled, but the front area should be cooled at minimum.

Any shape may be used only if both side (right and left areas of the extending direction) of the crack can be cooled symmetrically. A size of the cooled area has a lower limit and the lower limit depends on a width W of the substrate. A diameter X of the crack in the extending direction is desirably represented by a numerical relation of X/W>0.005. In other words, the diameter of the crack that is 0.5% greater or more of the width of the substrate must be cooled.

Upon the local cooling, it is sufficient to cool a part of the heating zone (the tip of the crack) to room temperature, where has been heated to the predetermined temperature exceeding room temperature. Accordingly, the local cooling corresponds to a local formation of a non-heated area. It may be cooled to room temperature or less. As cooling means, air at room temperature, a mixture of air and water, cooled solid such as metals and ceramics may be contacted with the substrate. The local cooling can control and cool an area to be cooled accurately compared to a fluid cooling. Advantageously, this allows a great stress intensity factor and a high extending speed of the crack.

The linear heat source may be contacted with one surface of the substrate to form the heating zone, and the cooling medium may be sprayed from the nozzle on the other surface of the substrate. The cooling medium is desirably sprayed with a pair of nozzles disposed at both sides of the linear heat source bidirectionally to a contact portion of the linear heat source and the substrate. According to the bidirectional method, both of the substrate and the linear heat source are spontaneously cooled locally and a thin fluid film is produced between the linear heat source and the substrate to lose thermal conductivity toward the substrate. Therefore, an excellent response of the heat stress and high extending speed of the crack can be advantageously obtained. The nozzle may be tilted not to cool the front area of the tip of the crack and to spray the cooling medium backward to the crack.

Upon contacting the linear heat source, i.e., heater, with the substrate, the heater is supported not to make a non-contact portion between the heater and the substrate. Almost whole heater is supported so as not to lower temperature at the support portion. The linear heat source may be curved.

Therefore, according to the aspects of the present invention, a substrate composed of a non-metal material such as glass and ceramics is contacted with a linear heat source such as a sheath heater to form a heating zone, a tip of a crack produced on the heating zone is cooled locally so that the crack extends along the heating zone to separate the substrate. Thus, the method for linearly separating a non-metal material can be provided leaving no non-cut area and with no out-of-plane distortion even though the non-metal material is a large width substrate. By applying an inverted stress to dissipate a stress for closing the crack with the crack being approaching to the end, the separation method at high and uniform speed and can be provided. By cooling locally the end of the substrate, the problems that the crack also extends from the other end of the substrate and the cracks produced from the two edges are linked together to lower linearity of the separation can be overcome, even through the substrate has a wide width.

### BRIEF DESCRIPTION OF THE DRAWINGS

The above and other object, advantages and features of the present invention will be more apparent from the following description taken in conjunction with the accompanying drawings in which:
Fig. 1 is a perspective view illustrating one embodiment of a method for separating a non-metal material according to the present invention;
Fig. 2 is a partial plan view of the substrate showing a change in a shape of a tip of a crack caused by a local cooling according to the present invention;
Figs. 3A and 3B are partial plan views of the substrate for explaining a relation between a local cooled area and a stress;
Figs. 4A and 4B show one embodiment of a sheath heater supporting stand according to the present invention;
Figs. 5A and 5B show other embodiment of a sheath heater supporting stand according to the present invention;
Fig. 6 is a sectional view illustrating other embodiment of a separating method according to the present invention;
Figs. 7A and 7B show a principle that an inverted stress is applied to an end of the substrate;
Fig. 8 shows a separating method utilizing a movable local cooling and a fixed local cooling according to the present invention;
Fig. 9 is a perspective view showing a method for separating a substrate using a conventional linear heat source;
Figs. 10A and 10B show a principle of separating the substrate using the conventional linear heat source;
Fig. 11 is a partial plan view of the substrate for explaining a decrease in a stress intensity factor adjacent to the end; and
Fig. 12 is a graph showing a relation between a ligament length and a stress intensity factor.

### DESCRIPTION OF THE PREFERRED EMBODIMENTS

Hereinafter, an embodiment of the present invention will be described with reference to the drawing.

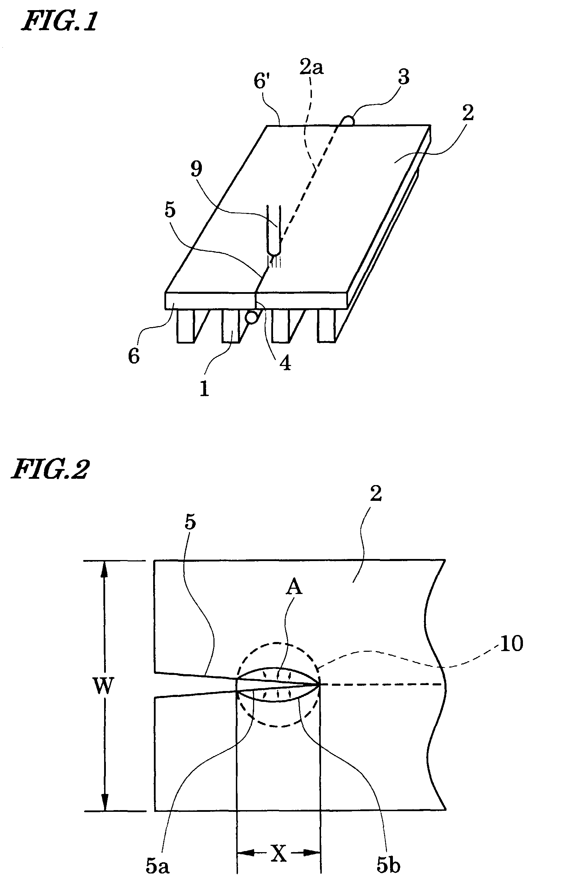

As shown in Fig. 1, a soda glass substrate 2 having a length of 1100mm, a width of 1440mm and a thickness of 2.8mm is mounted and fixed on a supporting stand 1 (no mounting and fixing means are shown). As a linear heat source, a sheath heater 3 having a diameter of 9 mm, a length of 1400 mm and input power of 600 W is disposed in contact with a bottom surface of the glass substrate 2 along a line to be separated. In order to prevent a temperature distribution from being uneven, the sheath heater 3 is closely contacted with the glass substrate 2 over a whole length of the substrate. At a position of starting separation at one side edge 6 of the glass substrate 2, an end face flaw 4 is formed in advance. The end face flaw 4 is formed not on a top or bottom surface but on the side edges of the glass substrate 2 by engraving perpendicularly (in a thickness direction) so as not to impair appearance of the glass substrate 2. On the top of the glass substrate 2, a cooling nozzle 9 is disposed such that an opening of the nozzle faces with the glass substrate 2.

After the glass substrate 2 is configured as described above, the sheath heater 3 is then switched on to heat a linear area of the glass substrate 2 in contact with the sheath heater 3 and to form a heating zone 2a. When temperature of the glass substrate 2 raises to predetermined temperature, i.e., 50°C, a stress is concentrated on the end face flaw 4 to produce a crack 5. Once the crack 5 is produced, the moment of the stress produces subsequently a stress intensity factor to start a crack extension readily and smoothly with minimum energy. Immediately after the start of the crack extension, air at room temperature is sprayed from the nozzle 9 to the top surface of the glass substrate 2 to cool a tip of the crack 5 to room temperature locally, thereby extending the crack 5 at high speed owing to a synergistic effect of a stress deviation by heating and a stress deviation by local cooling. In accordance with the extension of the crack 5, the nozzle 9 is moved toward a crack 5 extending direction using a driving device (not shown) to cool the tip of the crack 5 locally and continuously. The crack 5 is extended certainly and linearly to the other side edge 6' of the glass substrate 2. The glass substrate 2 having a wide width, i.e., 1440mm can be separated leaving no non-cut area and with no out-of-plane distortion.

If the tip of the crack 5 is heated with only the linear heat source without local cooling, the tip has a shape represented by a solid line 5a shown in Fig. 2. On the other hand, when a substantially circle area 10 of the tip of the crack 5 is heated and then locally cooled, the tip contracts in an arrow direction A and opens largely as represented by a solid line 5b. The large opening at the tip of the crack 5 is formed by superposing a stress intensity factor caused by the linear heat source and a stress intensity factor caused by the local cooling, which is motive power for extending the crack. A contractive force A is produced on a surface of the glass substrate. Accordingly, the present invention is suitably for separating a relatively thin substrate.

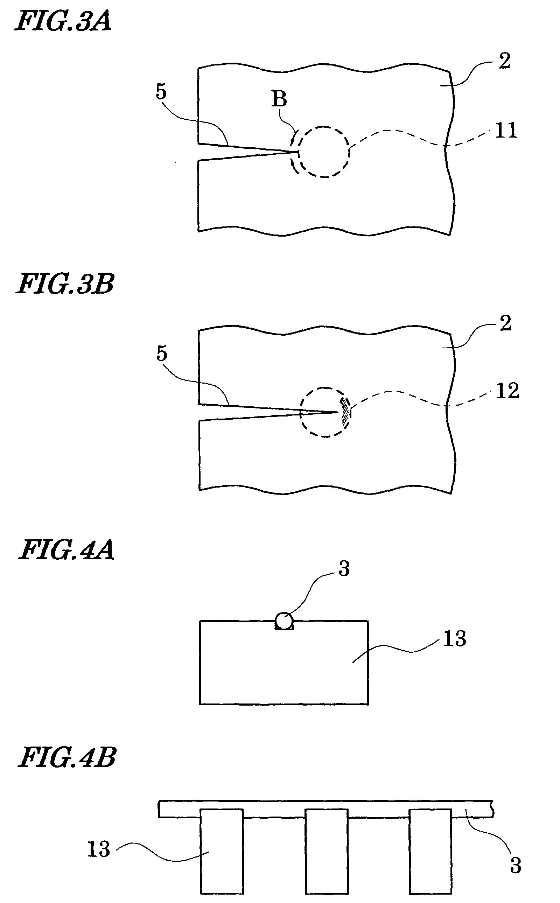

According to the present embodiment, the contractive force represented by an arrow A shown in Fig. 2 is produced on the tip of the crack 5 by the local cooling to open the tip of the crack 5. It is therefore critical to the present invention to select an area to be cooled locally as shown in Fig. 3A. It is a key point that a front area 11 of the tip of the crack 5 should not be cooled locally. If the front area 11 is cooled locally, a contractive force represented by an arrow B is produced near the front area 11 where the crack 5 is to be extended to prevent opening such that the crack 5 cannot be extended. In an actual air spraying, an area 12 shown in Fig. 3B may be cooled locally not only the tip of the crack 5 but also the front of the crack 5 depending on air diffusion. A contractive force for facilitating opening and a contractive force for retarding opening exist. In order to decrease the contractive force for retarding opening, the front cooled area (represented by slant lines) is needed to be as minimum as possible. The nozzle 9 is disposed inclined backward to the crack 5 to spray air backward.

The area local cooled may be in a shape of circle, ellipse and rectangle, but not limited thereto. A size of the local cooled area is represented by a diameter (or length) X along an extending direction of the crack 5 as shown in Fig. 2. A width of the glass substrate W is represented by a numerical relation of X/W>0.005. For example, in case that the width of the glass substrate is 1000mm, an area having a diameter of not less than 5mm is required to be cooled. If the diameter is less than 5mm, the contractive force A is insufficient to open the tip of the crack 5 that less contributes to extend the crack 5. An upper limit of the diameter is not especially required to be limited in view of an extension of the crack 5. The upper limit of the diameter may be decided depending on other conditions.

After the glass substrate 2 having a width of 1440 mm was set as an configuration of Fig. 1, the heater was switched on. It took 60 to 65 seconds to start extending a crack 5 from an end face flaw 4 on the substrate 2. Further, it took about 60 seconds to extend the crack 1100 mm in length to the end of the substrate 2. A temperature of the heater was about 135°C upon starting the crack extension from the end face flaw 4 and was about 215°C upon completion of separation. A temperature of the heating zone on the top surface of the glass substrate was about 50°C directly above the heater and about 25°C 5mm apart from the heater. Room temperature was 20°C.

As described above, the substrate 2 can be separated by extending the crack 5 whereby the heating zone 2a on the glass substrate 2 is heated only to 50°C and is cooled locally to near room temperature with air sprayed from the nozzle 9. In case that gas, which is cooled to room temperature or less in advance, is sprayed to the heating zone 2a to be cooled locally, a greater contractive force A and a larger opening at the tip of the crack 5 are obtained so that the crack 5 extends easily. However, the cooled gas has a great cooling power to the glass substrate 2, therefore it is effective that the nozzle 9 is tilted backward to the crack 5 so as not to cool the front area 11 of the tip of the crack 5.

In the above-mentioned configuration, after the glass substrate was set, the heater was switched on. It took longer time to increase temperature of the heater. Alternatively, the heater may be heated to predetermined temperature in advance and be contacted with the glass substrate 2, thereby shorten a time to start extending the crack 5 from the end face flaw 4.

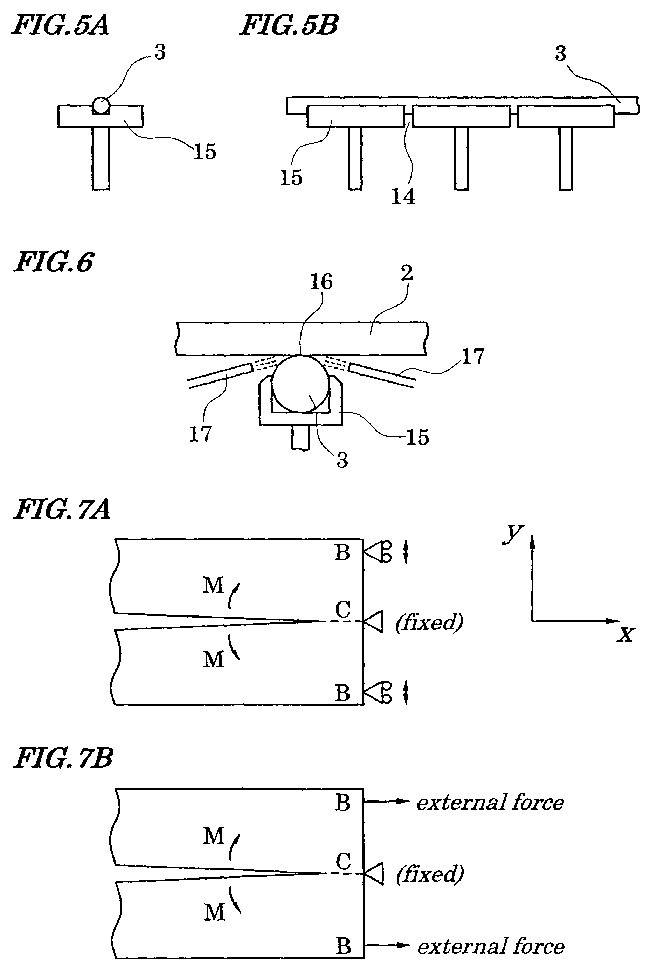

A method for supporting the heater will be described. The heater of the configuration in Fig. 1 is supported by a plurality of blocks 13 as shown in Fig. 4. A temperature of the heater contacted with the blocks 13 significantly decreases compared with that of remaining portions of the heater. As a result, the crack 5 stops temporary before the blocks and then, after seconds, extends to a position exceeding the blocks at a stretch. Thus, deviation is produced on a surface separated. In addition, linearity of the heater not supported by the blocks is not assured, resulting in poor linearity of separation as well. In order to improve these problems, heater guilds 15 supporting substantially whole of the heater with reliefs 14 for thermal expansion as shown in Fig. 5 are effective.

Other embodiment of the separating method according to the present invention will be described. As shown in a partly enlarged sectional view of Fig. 6, a sheath heater 3 supported by a heater guide 15 is disposed in contact with a bottom surface of the glass substrate 2, a contact portion 16 where the glass substrate 2 is contacted with the sheath heater 3 is cooled locally by air sprayed by a pair of nozzles 17, 17 disposed at both sides of the sheath heater 3. The air is sprayed toward the contact portion 16 with spreading to some extent to cool both of the glass substrate 2 near the contact portion 16 and the heater 3 concurrently and efficiently. Further, the air cools directly a heated surface of the glass substrate 2, whereby temperature decreases with a good response. An opening is readily formed on the tip of the crack 5 by cooling to extend the crack 5 in a short time. The air is sprayed to the contact portion 16, whereby a small clearance is formed between the glass substrate 2 and the sheath heater 3. Advantageously, the glass substrate 2 is cooled locally more efficiently.

In respective embodiments described above, the glass substrate 2 is fixed and the nozzle is moved. Alternatively, the nozzle may be fixed and the glass substrate may be moved. In other words, it is important to always cool locally the tip of the crack 5 when extending. To do this, control means for detecting an extending position of the crack 5 and correspondingly for moving the glass substrate 2 or the nozzle 9 are required. The means may be in various constructions. For example, a camera for detecting and an image processing are effective means.

According to the method for local cooling the tip of the crack 5, the crack extension speed is high and a decrease in the stress intensity factor is significantly retarded when the crack 5 approaches to the end of the substrate 2. Nevertheless, the crack extension speed is low when the crack 5 approaches to the end of the substrate 2. This is a peculiar problem for the separating method by extending the crack 5 using the linear heat source. Without local cooling, when the crack 5 approaches to the end and it becomes in a relation of d/W<1.5, a stress at the end urges the crack 5 to be closed as shown in Fig. 11 and the stress intensity factor steeply decreases. If an inverted stress is applied to the end so as to dissipate a stress for closing the crack 5 and the crack 5 is heated by the linear heat source, a decrease in the stress intensity factor at the end is compensated and the crack 5 can be extended to the end at approximately constant speed. Using a combination of the inverted stress applied to the end and the local cooling of the tip of the crack 5, the substrate 2 can be separated at a high speed without decreasing the speed.

Desirably, the inverted stress is applied to the end, i.e., a free surface, of the substrate in an inverted distribution to a stress distribution shown in Fig. 11, thereby obtaining a pseudo stress similar to that of a semi-infinite plate. In practice, a point C on a line to be separated on the end of the substrate 2 is nipped with a jig such as a grip to fix so as not to move it to the crack extension direction (x direction) as shown in Fig. 7A, and both sides of the point C, for example terminal portions B, B are held movably with a jig in a perpendicular direction (y direction) to the crack extension direction. Alternatively, the point C is fixed and both sides of the point C, for example the portions B, B are held with the jig such as the grip and are pulled to the x direction, thereby affecting external force to the portions B, B as shown in Fig. 7B. In other words, a stress is applied thereon to produce the moment M. Concrete means for applying the stress are not limited thereto.

Another embodiment of the separating method according to the present invention will be described. According to the present invention, the strip plate substrate 2 composed of the non-metal material is contacted with the linear heat source 3 such as the sheath heater to form the heating zone 2a, the crack 5 is extended by applying a heat from the end face flaw 4 formed at one edge of the substrate in advance with the tip of the crack 5 being cooled locally and the cooled area being moved along the heating zone 2a, thereby extending the crack 5 to the end of the substrate 2 at a high speed to separate the substrate 2 as described above. The end face flaw 4 is introduced in order to easily produce the crack 5 at one edge 6 of the substrate 2. If the substrate has narrower width, the crack 5 extends only from the edge 6 introduced the end face flaw as described above. However, if the substrate 2 has wider width (for example, the width W is 300mm or more), the crack 5 may extend from an opposite edge (end 6'). The cracks 5 produced from the two edges faced approach each other upon extending and finally are linked together. The crack 5 linked has poor linearity causing a low separation accuracy, thereby lowering quality.

A method for solving the problem will be described. As shown in Fig. 8, a point P on the heating zone 2a near the edge 6' of the substrate 2 is cooled locally. The local cooling area is fixed to the point P and is not moved. In combination with the local cooling, the nozzle 9 is moved from the edge 6 to the edge 6' to extend the crack 5 produced from the end face flaw 4 to the edge 6'. A compressive stress in the y direction is produced on the edge 6' by cooling the point P fixed and a tensile stress in the y direction is produced on the edge 6. Accordingly, the crack extension is retarded at the edge 6' and is facilitated at the edge 6. Thus, the crack 5 can be assuredly extended only from the edge 6 at a shorter time. The nearer the point P to the edge 6' is, the shorter the affecting time of this phenomenon is. If the point P is on the edge 6', no compressive stress in the y direction is produced on the cooled point P. Therefore, the edge 6' should not be cooled. A position of the point P is desirably in the rage of 0<X_{θ}≤0.2L (where (X_{θ} ,0) is a coordinate of the point P based on the edge 6' and L is a length of the substrate, with the proviso that X_{θ}=0 is excluded). A reason why the upper limit is 0.2L is that the compressive stress is hard to be applied to the edge 6' if X_{θ} is more than 0.2L, and no tensile stress is produced on the edge 6. In the local cooling with the cooling position fixed near the end, a concrete cooling method is similar to that of the local cooling with the cooling position moved, therefore no explanation is provided.

It is apparent that the present invention is not limited to the above embodiments but may be changed and modified without departing from the scope and spirit of the invention.

Finally, the present application claims the priorities of Japanese Patent Applications Nos. Hei 09-251515 and Hei 09-314728 filed respectively on September 17 and November 17, 1997, which are herein incorporated by reference.

## Claims

1. A method for separating a non-metal material (2), characterized by the steps of:
contacting a substrate (2) made of the non-metal material (2) with a linear heat source (3) to form a heating zone (2a),
cooling locally a crack (5) produced on the heating zone (2a), and
extending the crack (5) along the heating zone (2a) to separate the substrate (2).

2. A method for separating a non-metal material, characterized the steps of:
contacting a substrate (2) made of the non-metal material with a linear heat source (3) to form a heating zone (2a),
extending a crack (5) produced on the material by applying a heat, and
applying an inverted stress to an end of the substrate (2) so as to dissipate a stress for closing the crack (5) with the crack (5) being approached to the end.

3. A method for separating a non-metal material, characterized the steps of:
contacting a substrate (2) made of the non-metal material with a linear heat source (3) to form a heating zone (2a),
cooling locally a tip of a crack (5) produced on the heating zone (2a), and
applying an inverted stress to an end of the substrate (2).

4. A method for separating a non-metal material according to claim 1,
characterized in that a tip of the crack (5) is cooled.

5. A method for separating a non-metal material according to claim 1,
characterized in that the linear heat source (3) is contacted with one surface of the substrate (2), and a cooling medium is sprayed onto the heating zone (2a) of the other surface to cool locally.

6. A method for separating a non-metal material according to claim 1,
characterized in that the cooling medium may be sprayed onto a contact portion of the substrate (2) and the linear heat source (3) bidirectionally.

7. A method for separating a non-metal material according to claim 5,
characterized in that at least one nozzle (9;7) is disposed at a tilt to the substrate (2) to spray the cooling medium backward to the crack (5).

8. A method for separating a non-metal material according to claim 1,
characterized in that a diameter of the local cooled area is 0.5% greater or more of a width of the substrate (2).

9. A method for separating a non-metal material according to claim 2,
characterized in that a portion being subject to separation at the edge of the substrate (2) is fixed and both sides of the portion are held movably in a crack (5) extending direction and a perpendicular direction thereof.

10. A method for separating a non-metal material according to claim 2,
characterized in that a portion being subject to separation at the end of the substrate (2) is fixed and external force is added to both sides of the portion in the crack (5) extending direction.

11. A method for separating a non-metal material characterized the steps of:
contacting a substrate (2) made of the non-metal material with a linear heat source (3) to form a heating zone (2a),
cooling locally the heating zone (2a) adjacent to one side edge of the substrate (2) opposite to the other side edge (6) having a flaw (4) with a cooling position being fixed,
cooling locally a crack (5) produced from the end face flaw (4) on the heating zone (2a), and
moving the local cooled area of the crack (5) along the heating zone (2a) and extending the crack (5) along the heating zone (2a).

12. A method for separating a non-metal material according to claim 11,
characterized in that the cooling position X_{θ} upon the local cooling being fixed has a numerical relation of 0<X_{θ}≤0.2L (L is a length of the substrate (2)) based on the edge (X_{θ}=0) of the substrate (2).
